# EUROPEAN PATENT SPECIFICATION

(11) **EP 4 552 960 B1**
(45) Date of publication and mention of the grant of the patent: **04.11.2026**
(21) Application number: 24211375.1
(22) Date of filing: 07.11.2024
(51) Int. Cl.: B62J 45/41, B62K 21/26, G01L 1/14

(54) **TWIST-GRIP CONTROL DEVICE, PARTICULARLY FOR MOTORCYCLES**
DREHGRIFFSTEUERVORRICHTUNG, INSBESONDERE FÜR MOTORRÄDER
DISPOSITIF DE COMMANDE À POIGNÉE TOURNANTE, EN PARTICULIER POUR MOTOCYCLETTES

(30) Priority: 09.11.2023 IT 202300023673
(43) Date of publication of application: 14.05.2025
(73) Proprietor: Bitron S.p.A., 10122 Torino (IT)
(72) Inventor: BOCCACCIO, Giovanni, I-16135 GENOVA (IT); COSTANTINI, Mauro, I-17100 SAVONA (IT)
(74) Representative: Vanzini, Christian

(56) References cited:
- JP-A- 2021 187 293
- US-A1- 2021 016 771
- US-A1- 2021 208 012
- US-A1- 2022 397 468

## Description

The present invention relates, to a twist-grip control device, particularly for motorcycles and the like.

Twist-grip control devices are known, equipped with capacitive sensors configured to detect the hand of a user positioned near or gripping a handgrip element of the control device. In particular, devices are known in which the capacitive sensor comprises one or two metal sheets arranged coaxially around a longitudinal axis of the handgrip element. The document US 2021/016771 A1 discloses a twist-grip control device, particularly for motorcycles, in accordance with the preamble of claim 1.

An object of the present invention is to achieve a configuration that allows distinguishing between different hand positioning conditions relative to the handgrip element.

This and other objects are achieved according to the invention with a twist-grip control device, comprising a handgrip element that includes:
a tubular body configured to be mounted coaxially on a handlebar,
a capacitive sensor assembly for detecting a user's hand, said capacitive sensor assembly comprising a flexible support made of dielectric material arranged around an outer side surface of the tubular body, and at least one metal electrode carried by said flexible support, and
a coating arranged around the flexible support,
wherein said capacitive sensor assembly comprises a rear array of capacitive sensors arranged on a rear side of the handgrip element, configured to receive the palm of said hand, said rear array of capacitive sensors including:
   a first rear capacitive sensor comprising a first rear detection electrode arranged on the flexible support, the first rear detection electrode being unshielded,
   a second rear capacitive sensor comprising a second rear detection electrode arranged on a radially inner face of the flexible support, and a rear shielding electrode arranged on a radially outer face of the flexible support, the second rear detection electrode being interposed between the rear shielding electrode and the tubular body,
   wherein said capacitive sensor assembly further comprises circuit means configured to connect the first and second rear detection electrodes to an electric signal source and to connect the rear shielding electrode to ground.

With the electrode arrangement described above, it is possible to distinguish between a condition in which the user's hand is in contact with or near the handgrip element, and a condition in which the hand is in contact with or near the metal handlebar of the motorcycle.

According to a preferred embodiment, the rear array of capacitive sensors further comprises a third rear capacitive sensor comprising a third rear detection electrode arranged on the radially outer face of the flexible support, and a second rear shielding electrode arranged on the radially inner face of the flexible support and interposed between the third rear detection electrode and the tubular body,
wherein the circuit means are further configured to connect the third rear detection electrode to the electric signal source and to connect the second rear shielding electrode to ground.

According to another preferred embodiment, the device further comprises at least one of the following:
an unshielded front capacitive sensor arranged on a front side of the handgrip element, configured to receive the fingers of said hand, the unshielded front capacitive sensor comprising an unshielded front detection electrode arranged on the flexible support, wherein the circuit means are further configured to connect the unshielded front detection electrode to the electric signal source, and
a shielded front capacitive sensor arranged on the front side of the handgrip element, configured to receive the fingers of said hand, the shielded front capacitive sensor comprising a shielded front detection electrode arranged on the radially outer face of the flexible support, and a front shielding electrode arranged on the radially inner face of the flexible support and interposed between the shielded front detection electrode and the tubular body, wherein the circuit means are further configured to connect the shielded front detection electrode to the electric signal source and to connect the front shielding electrode to ground.

The additional sensors described above may allow identify further positioning conditions, such as a condition in which the hand fully grips the handgrip element, or they can be used to confirm conditions detected with the first rear capacitive sensor and the second rear capacitive sensor.

Further characteristics and advantages of the invention will appear from the following detailed description, provided purely by way of non-limiting example, with reference to the accompanying drawings, wherein:
Figures 1 and 2 are perspective views of a twist-grip control device according to the present invention, respectively from an upper-rear side and a lower-front side;
Figure 3 is a plan view of a radially outer face of a capacitive sensor assembly of the control device of Figures 1 and 2;
Figure 4 is a plan view of a radially inner face of the capacitive sensor assembly of Figure 3;
Figure 5 is a perspective view of the capacitive sensor assembly in an assembling condition;
Figure 6 is a cross-sectional view of a handgrip element of the control device;
Figure 7 is a block diagram representing the operating principle of the present invention;
Figure 8 is a schematic representation of a microcontroller of the block diagram of Figure 7;
Figure 9 is a cross-sectional view representing a hand gripping the handgrip element of Figure 6; and
Figures 10 to 13 are perspective views representing different hand positions relative to the handgrip element, respectively far from the handgrip element (Figure 10), with the palm close to or in contact with the handgrip element (Figure 11), and with the hand fully gripping the handgrip element (Figures 12 and 13).

In the drawings, 1 generally denotes a twist-grip control device. Such a control device can be particularly installed on a motorcycle steering handlebar.

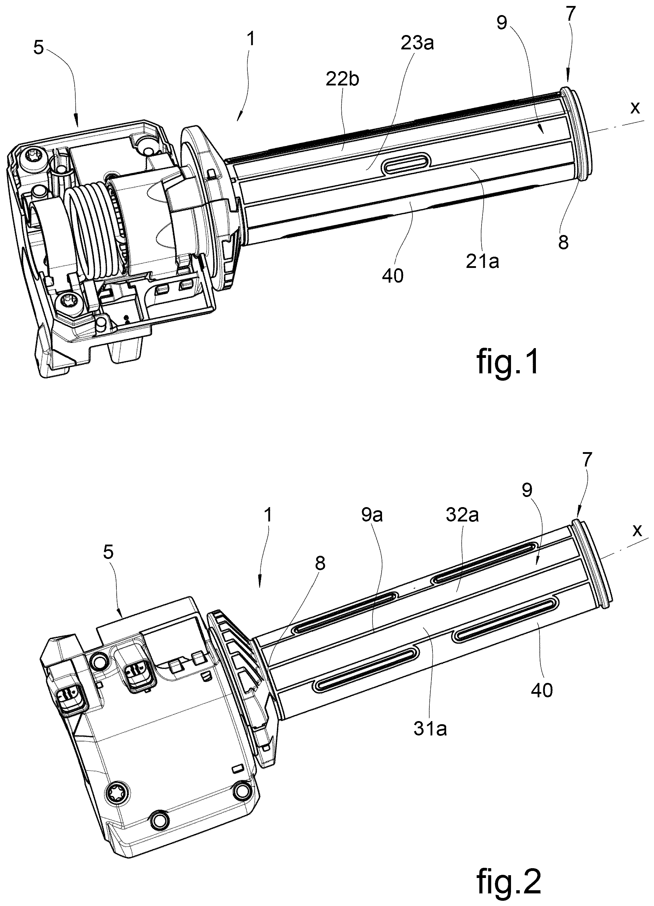

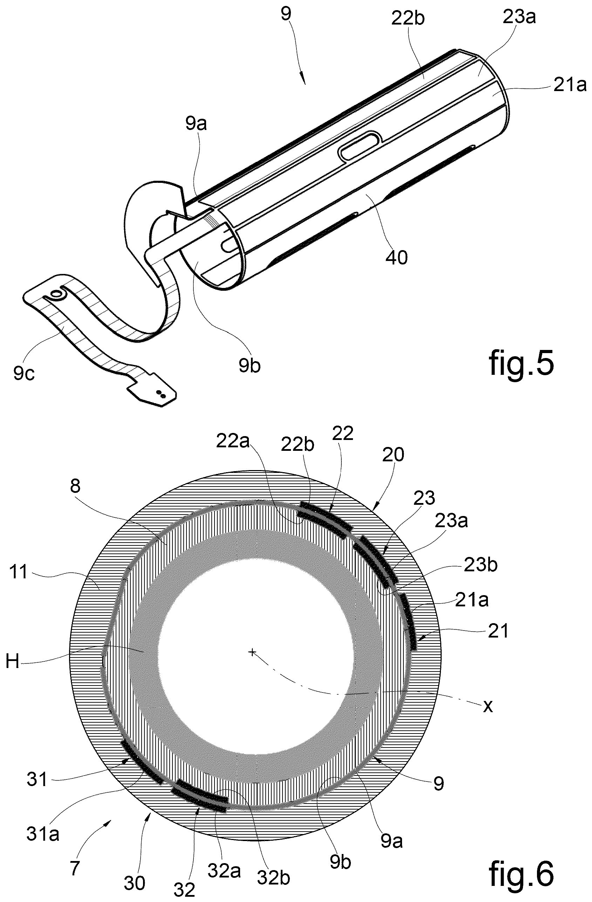

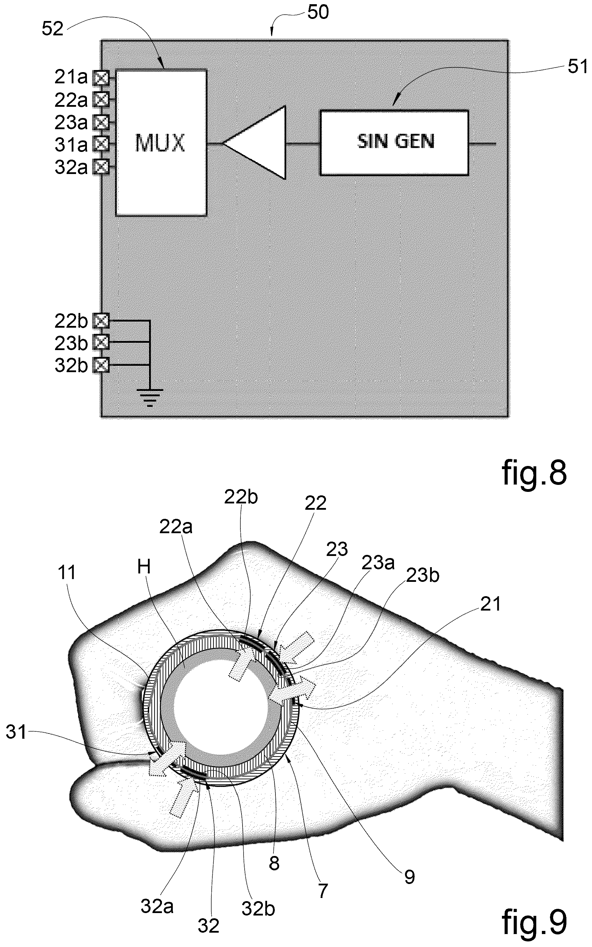

With reference to Figures 1 and 2, the control device 1 comprises a stator part 5 that is operatively stationary and configured to be fixed to the handlebar of a motorcycle, denoted as H in Figures 6 and 9.

A handgrip element 7 is mounted on the stator part 5, particularly in a manually rotatable manner around an x-axis relative to the stator part 5. The handgrip element 7 is conventionally operated by the rider of a motorcycle to control the supply and power developed by the motorcycle engine. The constructional details of the stator part 5 and the methods of coupling the handgrip element 7 to the stator part 5 are not essential to the invention.

The handgrip element 7 includes a tubular body 8 made of plastic material, within which a trailing part of the handlebar H, which is generally made of metal, is intended to be inserted coaxially.

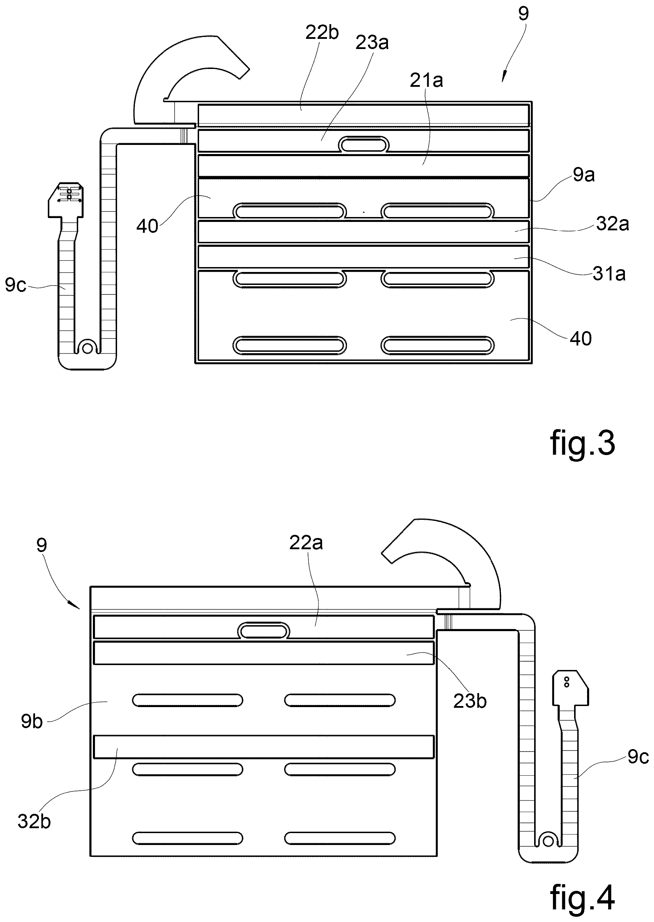

On the tubular body 8, a capacitive sensor assembly configured to detect a user's hand is mounted. This capacitive sensor assembly comprises a flexible support 9 made of dielectric material, for example, a plastic film, arranged around an outer side surface of the tubular body 8. The flexible support 9 is generally provided in a planar shape, as shown in Figures 3 and 4, and then curved as shown in Figure 5 to be wrapped around the tubular body 8 as shown in Figures 1 and 2, and fixed thereto in a known manner.

The flexible support 9 has a face 9a (visible in Figure 3) that, in the installed condition on the handgrip element 7, is radially outward-facing, and therefore will simply be referred to as the radially outer face. On the opposite side, the flexible support 9 has a face 9b (visible in Figure 4) that, in the installed condition, is radially inward-facing (i.e., toward the tubular body 8), and therefore will simply be referred to as the radially inner face.

The flexible support 9 carries a plurality of metal electrodes that will be described below, which are formed on the flexible support 9 in a known manner, for example, by metallization.

A coating 11 made of plastic material, particularly elastomeric, is arranged around the flexible support 9, which for simplicity has been omitted in most figures and shown only in Figures 6 and 9. The coating 11 can be a separately made element and then mounted on the tubular body/flexible support assembly, or it can be formed by moulding directly onto the tubular body/flexible support assembly. The manufacturing methods of the coating are not essential to the invention.

The capacitive sensor assembly comprises a rear array 20 of capacitive sensors arranged on a rear side of the handgrip element 7, configured to receive the palm of the hand. The terms "front" and "rear" refer to the installation condition on the vehicle, where "front" and "rear" indicate an element that precedes and follows, respectively, in the vehicle travel direction. The first array 20 of capacitive sensors includes:
a first rear capacitive sensor 21 comprising a first rear detection electrode 21a, arranged on the radially outer face 9a of the flexible support 9 (or alternatively on the radially inner face 9b of the flexible support 9),
a second rear capacitive sensor 22 comprising a second rear detection electrode 22a arranged on the radially inner face 9b of the flexible support 9, and a first rear shielding electrode 22b arranged on the radially outer face 9a of the flexible support, the second rear detection electrode 22a being interposed between the first rear shielding electrode 22b and the tubular body 8, and
a third rear capacitive sensor 23 comprising a third rear detection electrode 23a arranged on the radially outer face of the flexible support 9, and a second rear shielding electrode 23b, arranged on the radially inner face 9b of the flexible support 9 and interposed between the third rear detection electrode 23a and the tubular body 8.

The first capacitive sensor 21 is devoid of shielding electrodes associated with the first detection electrode 21a; therefore, the first detection electrode 21a is unshielded.

The third rear capacitive sensor 23 may be absent.

The capacitive sensor assembly may also comprise a front array 30 of capacitive sensors arranged on a front side of the handgrip element 7, configured to receive the fingers of the hand. The front array of capacitive sensors includes:
an unshielded front capacitive sensor 31 comprising an unshielded front detection electrode 31a arranged on the radially outer face 9a of the flexible support 9 (or alternatively on the radially inner face 9b of the flexible support 9), and
a shielded front capacitive sensor 32 comprising a shielded front detection electrode 32a arranged on the radially outer face 9a of the flexible support 9, and a front shielding electrode 32b arranged on the radially inner face 9b of the flexible support 9 and interposed between the shielded front detection electrode 32a and the tubular body 8.

The unshielded front capacitive sensor 31 does not have shielding electrodes associated with its detection electrode 31a.

According to alternative embodiments not illustrated, only one of the unshielded front capacitive sensors 31 or the shielded front capacitive sensor 32 may be present.

In the figures, the detection and shielding electrodes are shown in a simplified manner as simple parallel strips extending in the longitudinal direction of the tubular body 8. However, it is understood that the geometry of the electrodes may differ from that shown. In Figures 3-5, wiring 9c is also shown that allows connecting the electrodes of the flexible support 9 with an external circuit. For simplicity, the conductive traces connecting the various electrodes to the wiring 9c have not been shown.

On the flexible support 9, resistor tracks can also be formed to heat the handgrip element 7. In the figures, the areas where these resistor tracks are formed are denoted by 40. Furthermore, a temperature sensor, such as an NTC thermistor, can be present on the handgrip element 7.

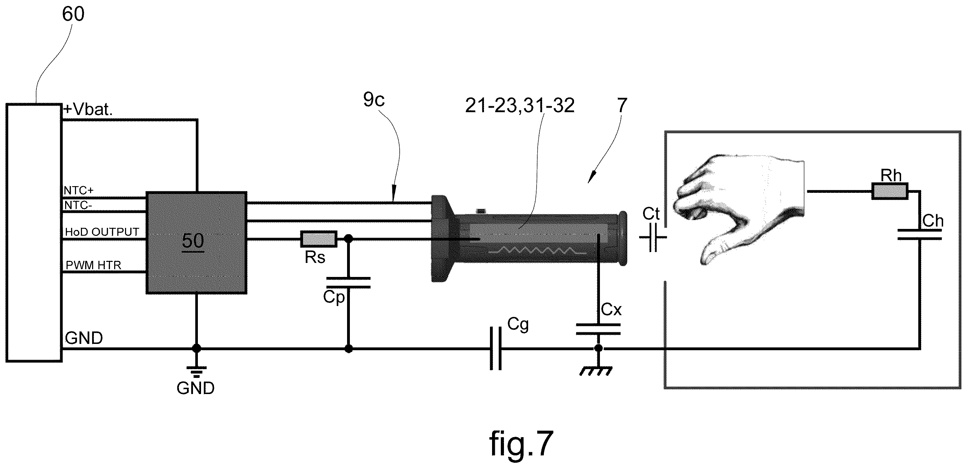

Referring to Figure 7, the operating principle of the capacitive sensor assembly described above is now described. The microcontroller denoted by 50 is installed onboard the control device 1 and connected to the capacitive sensor assembly, the temperature sensor, and the resistor tracks 40 via the wiring 9c. The microcontroller 50 is in turn configured to be connected to an external control unit (not shown) onboard the vehicle via a connector 60.

The hand detection function (HoD), powered by the vehicle battery voltage (Vbat), converts the presence of the hand into a voltage signal that can have, for example, the following characteristics:
Hand on the handgrip --> Vout(HoD) > 6V typical > 80% Vbat.
Hand away from the handgrip --> Vout(HoD) < 6V typical < 20% Vbat.

The above values are provided solely by way of example. According to an embodiment, the capacitive sensor assembly may be powered by a regulated and stabilized voltage different from Vbat.

Each of the capacitive sensors 21-23 and 31-32 is a single-electrode sensor capable of measuring the apparent capacitance between the electrode and the ground of the sensor circuit. The base apparent capacitance of each single sensor is given by the combination of the parasitic capacitance Cp with the free space capacitance (self-capacitance) Cx of the sensor and the ground capacitance Cg.

When a part of the hand is near or in contact with the respective sensor, the apparent capacitance of the sensor increases due to the introduction of a parallel path to ground (the driver places his feet on the ground) through a "Human Body Model" (HBM). The contact capacitance Ct between the hand and the sensor forms a series combination with the capacitance Ch of the Human Body Model and the ground capacitance Cg. The capacitance change is provided to the microcontroller 50 via a capacitance-to-digital converter (CDC) which, by processing the information, returns the hand presence status (on/off) to an HoD OUTPUT stage that proceeds with the normalization of voltage values. The microcontroller 50 is also associated with a frequency and voltage generator 51 that generates an oscillating electric signal that is supplied to the detection electrodes. In the case of contact or proximity of the user's hand, the response signal provided by the detection electrodes to the microcontroller 50 will have a frequency and/or voltage different, depending on the variation in capacitance of the involved electrodes. The microcontroller 50 is also associated with a multiplexer 52 to select the signals associated with the various electrodes 21a-23a and 31a-32a. The shielding electrodes 22b, 23b, and 32b are connected to ground. Figure 8 shows the terminals of the microcontroller 50 associated with the various electrodes.

The onboard control unit of the vehicle can be programmed to activate/deactivate certain functions, such as a start-up authorization, based on the status signal provided by the microcontroller 50.

As shown in Figure 9, the first rear capacitive sensor 21 (unshielded) is sensitive to the presence of the hand both when placed on the rear side of the handgrip element 7 intended to receive the palm of the hand, and when the handlebar tube H made of metal is touched.

The third rear capacitive sensor 23 (with shielding on the substrate side facing the handlebar H) is sensitive only to the presence of the hand when placed on the rear side of the handgrip element 7 intended to receive the palm of the hand.

The second rear capacitive sensor 22 (with shielding on the substrate side facing radially outward, i.e., towards the ergonomically accessible part of the handgrip element) is sensitive only to the presence of the hand when placed in contact with the metal part of the handlebar H.

The unshielded front capacitive sensor 31 has the same function as the first rear capacitive sensor 21, with the difference that it is sensitive to the presence of the fingers of the hand when the handgrip element 7 is gripped.

The shielded front capacitive sensor 32 (with shielding on the substrate side facing the handlebar H) has the same function as the third rear capacitive sensor 23, with the difference that it is sensitive to the presence of the fingers of the hand when the handgrip element 7 is gripped.

By measuring the capacitance variations ΔC1a and ΔC3 of the first rear capacitive sensor 21 and the second rear capacitive sensor 22, respectively, it is possible to distinguish the following situations:
a) If ΔC1-a exists and ΔC3 is approximately 0 --> the hand is near or in contact with the handgrip element 7 at the rear side of the handgrip element 7 intended to receive the palm of the hand.
b) If ΔC1-a exists and ΔC3 exists (greater than a given threshold) --> the hand is near or in contact with the metal part of the handlebar H.
c) If ΔC1a exists and ΔC3 exists (greater than a given threshold), with ΔC1a >> ΔC3 --> the hand is near or in contact with the handgrip element 7 at the rear side of the handgrip element 7 intended to receive the palm of the hand, and also in contact with the metal part of the handlebar H.

By also measuring the capacitance variations ΔC2-a, ΔC1-b, and ΔC2-b of the third rear capacitive sensor 23, the unshielded front capacitive sensor 31, and the shielded front capacitive sensor 32, respectively, it is possible to distinguish the following additional situations:
d) If condition a) is met and ΔC1-b exists --> the hand is fully gripping the handgrip element 7.
e) If ΔC2-a exists --> condition a) is further confirmed.
f) If ΔC2-a exists and ΔC2-b exists --> condition d) is further confirmed.
g) If only ΔC1-b and ΔC2-b exist --> the hand is near or in contact with the front side of the handgrip element 7 intended to receive the fingers of the hand.

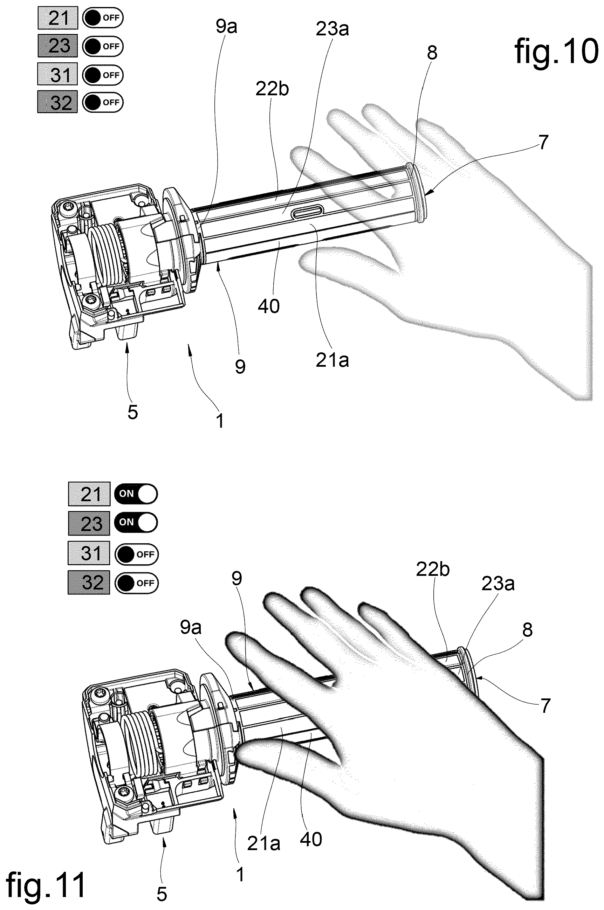

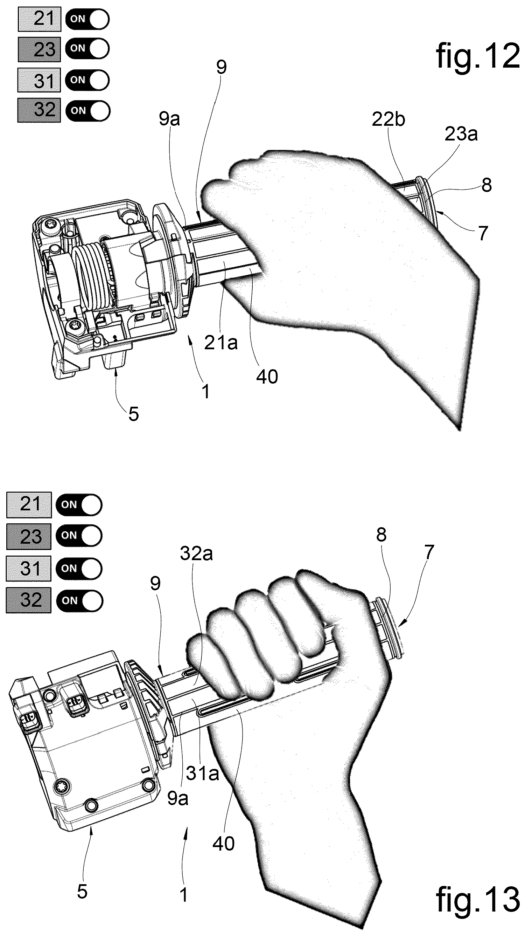

Some hand positioning conditions are illustrated in Figures 10 to 13, wherein the status of sensors 21, 23, 31, and 32 is also shown. In Figure 10, the hand is far from the handgrip element 7. The first rear capacitive sensor 21, the third rear capacitive sensor 23, the unshielded front capacitive sensor 31, and the shielded front capacitive sensor 32 are thus in an off state (the respective capacitance variations are near zero or at least below a given threshold). In Figure 11, the palm of the hand is near or in contact with the first rear capacitive sensor 21 and the third rear capacitive sensor 23, which are therefore in an on state. Figures 12 and 13 represent, from different sides, a condition in which the hand fully grips the handgrip element 7. All sensors 21, 23, 31, and 32 are in an on state.

## Claims

1. Twist-grip control device, particularly for motorcycles and the like, comprising a handgrip element (7) which includes:
a tubular body (8) configured to be mounted coaxially on a metal handlebar (H),
a capacitive sensor assembly for detecting a hand of a user, said capacitive sensor assembly comprising a flexible support (9) of dielectric material arranged around an outer side surface of the tubular body (8), and a plurality of metallic electrodes carried by said flexible support, and
a coating (11) arranged around the flexible support (9),
wherein said capacitive sensor assembly comprises a rear array (20) of capacitive sensors arranged on a rear side of the handgrip element (7) configured to receive the palm of said hand, and wherein the twist-grip control device is **characterised in that** said rear array of capacitive sensors including:
a first rear capacitive sensor (21) comprising a first rear detection electrode (21a) arranged on the flexible support (9), the first rear detection electrode(21a) being unshielded,
a second rear capacitive sensor (22) comprising a second rear detection electrode (22a) arranged on a radially inner face (9b) of the flexible support (9), and a rear shielding electrode (22b) arranged on a radially outer face (9a) of the flexible support (9), the second rear detection electrode (22a) being interposed between the rear shielding electrode (22b) and the tubular body (8),
wherein said capacitive sensor assembly further comprises circuit means (9c, 52) configured to connect the first and the second rear detection electrode (21a, 22a) to an electric signal source (51), and to connect the rear shielding electrode (22b) to ground.

2. Device according to claim 1, wherein the rear array (20) of capacitive sensors further comprises a third rear capacitive sensor (23) comprising a third rear detection electrode (23a) arranged on the radially outer face (9a) of the flexible support (9), and a second rear shielding electrode (23b) arranged on the radially inner face (9b) of the flexible support (9) and interposed between the third rear detection electrode (23a) and the tubular body (8),
wherein the circuit means (9c, 52) are further configured to connect the third rear detection electrode (23a) to the electric signal source (51), and to connect the second rear shielding electrode (23b) to ground.

3. Device according to claim 1 or 2, further comprising at least one of:
an unshielded front capacitive sensor (31) arranged on a front side of the handgrip element (7) configured to receive the fingers of said hand, the unshielded front capacitive sensor (31) comprising an unshielded front detection electrode (31a), arranged on the flexible support (9), wherein the circuit means (9c, 52) are further configured to connect the unshielded front detection electrode (31a) to the electric signal source (51), and
a shielded front capacitive sensor (32) arranged on the front side of the handgrip element (7) configured to receive the fingers of said hand, the shielded front capacitive sensor (32) comprising a shielded front detection electrode (32a), arranged on the radially outer face (9a) of the flexible support (9), and a front shielding electrode (32b) arranged on the radially inner face (9b) of the flexible support (9) and interposed between the shielded front detection electrode (32a) and the tubular body (8), wherein the circuit means (9c, 52) are further configured to connect the shielded front detection electrode (32a) to the electric signal source (51), and to connect the front shielding electrode (32b) to ground.

4. Method for operating a twist-grip control device according to any of the preceding claims, comprising
measuring capacity changes ΔC1-a and ΔC3 of the first rear capacitive sensor (21) and of the second rear capacitive sensor (22), respectively,
wherein a first condition in which the capacity change ΔC1-a is greater than a first threshold and the capacity change ΔC3 is about 0 is indicative of a condition in which the hand is close to or in contact with the handgrip element (7) at the rear side of the handgrip element (7) intended to receive the palm of the hand,
wherein a second condition in which the capacity change ΔC1-a is greater than the first threshold and the capacity change ΔC3 is greater than a second threshold is indicative of a condition in which the hand is close to or in contact with the handlebar,
wherein a third condition in which the capacity change ΔC1-a is greater than the first threshold and the capacity change ΔC3 is greater than the second threshold, with ΔC1-a >> ΔC3, is indicative of a condition in which the hand is close to or in contact with the handgrip element (7) at the rear side of the handgrip element (7) intended to receive the palm of the hand, as well as in contact with the handlebar (H).

5. Method according to claim 4, for operating the twist-grip control device according to claims 2 and 3, further comprising
measuring capacity changes ΔC2-a, ΔC1-b and ΔC2-b of the third rear capacitive sensor (23), of the unshielded front capacitive sensor (31) and of the shielded front capacitive sensor (32), respectively,
wherein a fourth condition in which the first condition is true and the capacity change ΔC1-b is greater than a third threshold is indicative of a condition in which the hand fully grips the handgrip element (7),
wherein a fifth condition in which the capacity change ΔC2-a is greater than a fourth threshold is further indicative of the condition in which the hand is close to or in contact with the handgrip element (7) at the rear side of the handgrip element (7) intended to receive the palm of the hand,
wherein a sixth condition in which the capacity change ΔC2-a is greater than the fourth threshold and the capacity change ΔC2-b is great-er than a fifth threshold is further indicative of the condition in which the hand fully grips the handgrip element (7),
wherein a seventh condition in which only the capacity changes ΔC1-b and ΔC2-b are greater than the respective thresholds is indicative of a condition in which the hand is close to or in contact with the front side of the handgrip element (7), and not with the rear side of the handgrip element (7).

## Patentansprüche

1. Drehgriffsteuervorrichtung, insbesondere für Motorräder und dergleichen, umfassend ein Handgriffelement (7), das Folgendes aufweist:
einen rohrförmigen Körper (8), der dazu konfiguriert ist, koaxial auf einem metallischen Lenker (H) montiert zu werden,
eine kapazitive Sensorbaugruppe zum Erfassen einer Hand eines Benutzers, wobei die genannte kapazitive Sensorbaugruppe einen flexiblen Träger (9) aus dielektrischem Material, der um eine äußere Seitenfläche des rohrförmigen Körpers (8) herum angeordnet ist, und eine Vielzahl metallischer Elektroden umfasst, die von dem genannten flexiblen Träger getragen werden, und
eine Beschichtung (11), die um den flexiblen Träger (9) herum angeordnet ist,
wobei die genannte kapazitive Sensorbaugruppe eine hintere Anordnung (20) kapazitiver Sensoren umfasst, die auf einer hinteren Seite des Handgriffelements (7) angeordnet sind, die dazu konfiguriert ist, die Handfläche der genannten Hand aufzunehmen, und wobei die Drehgriffsteuervorrichtung **dadurch gekennzeichnet ist, dass**
die genannte hintere Anordnung kapazitiver Sensoren Folgendes aufweist:
einen ersten hinteren kapazitiven Sensor (21), der eine erste hintere Erfassungselektrode (21a) umfasst, die auf dem flexiblen Träger (9) angeordnet ist, wobei die erste hintere Erfassungselektrode (21a) nicht abgeschirmt ist,
einen zweiten hinteren kapazitiven Sensor (22), der eine zweite hintere Erfassungselektrode (22a), die auf einer radial inneren Fläche (9b) des flexiblen Trägers (9) angeordnet ist, und eine hintere Abschirmelektrode (22b), die auf einer radial äußeren Fläche (9a) des flexiblen Trägers (9) angeordnet ist, umfasst, wobei die zweite hintere Erfassungselektrode (22a) zwischen der hinteren Abschirmelektrode (22b) und dem rohrförmigen Körper (8) angeordnet ist,
wobei die genannte kapazitive Sensorbaugruppe ferner Schaltungsmittel (9c, 52) umfasst, die dazu konfiguriert sind, die erste und die zweite hintere Erfassungselektrode (21a, 22a) mit einer elektrischen Signalquelle (51) zu verbinden und die hintere Abschirmelektrode (22b) mit Masse zu verbinden.

2. Vorrichtung nach Anspruch 1, wobei die hintere Anordnung (20) kapazitiver Sensoren ferner einen dritten hinteren kapazitiven Sensor (23) umfasst, der eine dritte hintere Erfassungselektrode (23a), die auf der radial äußeren Fläche (9a) des flexiblen Trägers (9) angeordnet ist, und eine zweite hintere Abschirmelektrode (23b), die auf der radial inneren Fläche (9b) des flexiblen Trägers (9) und zwischen der dritten hinteren Erfassungselektrode (23a) und dem rohrförmigen Körper (8) angeordnet ist, umfasst,
wobei die Schaltungsmittel (9c, 52) ferner dazu konfiguriert sind, die dritte hintere Erfassungselektrode (23a) mit der elektrischen Signalquelle (51) zu verbinden und die zweite hintere Abschirmelektrode (23b) mit Masse zu verbinden.

3. Vorrichtung nach Anspruch 1 oder 2, ferner umfassend mindestens eines der Folgenden:
einen nicht abgeschirmten vorderen kapazitiven Sensor (31), der auf einer vorderen Seite des Handgriffelements (7) angeordnet ist, die dazu konfiguriert ist, die Finger der genannten Hand aufzunehmen, wobei der nicht abgeschirmte vordere kapazitive Sensor (31) eine nicht abgeschirmte vordere Erfassungselektrode (31a) umfasst, die auf dem flexiblen Träger (9) angeordnet ist, wobei die Schaltungsmittel (9c, 52) ferner dazu konfiguriert sind, die nicht abgeschirmte vordere Erfassungselektrode (31a) mit der elektrischen Signalquelle (51) zu verbinden, und
einen abgeschirmten vorderen kapazitiven Sensor (32), der auf der vorderen Seite des Handgriffelements (7) angeordnet ist, die dazu konfiguriert ist, die Finger der genannten Hand aufzunehmen, wobei der abgeschirmte vordere kapazitive Sensor (32) eine abgeschirmte vordere Erfassungselektrode (32a), die auf der radial äußeren Fläche (9a) des flexiblen Trägers (9) angeordnet ist, und eine vordere Abschirmelektrode (32b), die auf der radial inneren Fläche (9b) des flexiblen Trägers (9) und zwischen der abgeschirmten vorderen Erfassungselektrode (32a) und dem rohrförmigen Körper (8) angeordnet ist, umfasst, wobei die Schaltungsmittel (9c, 52) ferner dazu konfiguriert sind, die abgeschirmte vordere Erfassungselektrode (32a) mit der elektrischen Signalquelle (51) zu verbinden und die vordere Abschirmelektrode (32b) mit Masse zu verbinden.

4. Verfahren zum Betreiben einer Drehgriffsteuervorrichtung nach einem der vorhergehenden Ansprüche, umfassend
das Messen von Kapazitätsänderungen ΔC1-a und ΔC3 des ersten hinteren kapazitiven Sensors (21) beziehungsweise des zweiten hinteren kapazitiven Sensors (22),
wobei eine erste Bedingung, bei der die Kapazitätsänderung ΔC1-a größer als ein erster Schwellenwert ist und die Kapazitätsänderung ΔC3 etwa 0 beträgt, auf einen Zustand hinweist, in dem sich die Hand nahe dem Handgriffelement (7) oder in Kontakt mit diesem an der hinteren Seite des Handgriffelements (7), die dazu bestimmt ist, die Handfläche der Hand aufzunehmen, befindet,
wobei eine zweite Bedingung, bei der die Kapazitätsänderung ΔC1-a größer als der erste Schwellenwert ist und die Kapazitätsänderung ΔC3 größer als ein zweiter Schwellenwert ist, auf einen Zustand hinweist, in dem sich die Hand nahe dem Lenker oder in Kontakt mit diesem befindet,
wobei eine dritte Bedingung, bei der die Kapazitätsänderung ΔC1-a größer als der erste Schwellenwert ist und die Kapazitätsänderung ΔC3 größer als der zweite Schwellenwert ist, mit ΔC1-a >> ΔC3, auf einen Zustand hinweist, in dem sich die Hand nahe dem Handgriffelement (7) oder in Kontakt mit diesem an der hinteren Seite des Handgriffelements (7), die dazu bestimmt ist, die Handfläche der Hand aufzunehmen, befindet sowie mit dem Lenker (H) in Kontakt steht.

5. Verfahren nach Anspruch 4, zum Betreiben der Drehgriffsteuervorrichtung nach den Ansprüchen 2 und 3, ferner umfassend
das Messen von Kapazitätsänderungen ΔC2-a, ΔC1-b und ΔC2-b des dritten hinteren kapazitiven Sensors (23), des nicht abgeschirmten vorderen kapazitiven Sensors (31) beziehungsweise des abgeschirmten vorderen kapazitiven Sensors (32),
wobei eine vierte Bedingung, bei der die erste Bedingung erfüllt ist und die Kapazitätsänderung ΔC1-b größer als ein dritter Schwellenwert ist, auf einen Zustand hinweist, in dem die Hand das Handgriffelement (7) vollständig umgreift,
wobei eine fünfte Bedingung, bei der die Kapazitätsänderung ΔC2-a größer als ein vierter Schwellenwert ist, ferner auf den Zustand hinweist, in dem sich die Hand nahe dem Handgriffelement (7) oder in Kontakt mit diesem an der hinteren Seite des Handgriffelements (7), die dazu bestimmt ist, die Handfläche der Hand aufzunehmen, befindet,
wobei eine sechste Bedingung, bei der die Kapazitätsänderung ΔC2-a größer als der vierte Schwellenwert ist und die Kapazitätsänderung ΔC2-b größer als ein fünfter Schwellenwert ist, ferner auf den Zustand hinweist, in dem die Hand das Handgriffelement (7) vollständig umgreift,
wobei eine siebte Bedingung, bei der nur die Kapazitätsänderungen ΔC1-b und ΔC2-b größer als die jeweiligen Schwellenwerte sind, auf einen Zustand hinweist, in dem sich die Hand nahe der vorderen Seite des Handgriffelements (7) oder in Kontakt mit dieser und nicht mit der hinteren Seite des Handgriffelements (7) befindet.

## Revendications

1. Dispositif de commande à poignée tournante, en particulier pour motocyclettes et analogues, comprenant un élément de poignée (7) qui comprend :
un corps tubulaire (8) configuré pour être monté coaxialement sur un guidon métallique (H),
un ensemble de capteurs capacitifs pour détecter une main d'un utilisateur, ledit ensemble de capteurs capacitifs comprenant un support flexible (9) en matériau diélectrique disposé autour d'une surface latérale extérieure du corps tubulaire (8), et une pluralité d'électrodes métalliques portées par ledit support flexible, et
un revêtement (11) disposé autour du support flexible (9),
dans lequel ledit ensemble de capteurs capacitifs comprend un réseau arrière (20) de capteurs capacitifs disposés sur un côté arrière de l'élément de poignée (7) configuré pour recevoir la paume de ladite main, et dans lequel le dispositif de commande à poignée tournante est **caractérisé en ce que**
ledit réseau arrière de capteurs capacitifs comprend :
un premier capteur capacitif arrière (21) comprenant une première électrode de détection arrière (21a) disposée sur le support flexible (9), la première électrode de détection arrière(21a) étant non blindée,
un deuxième capteur capacitif arrière (22) comprenant une deuxième électrode de détection arrière (22a) disposée sur une face radialement intérieure (9b) du support flexible (9), et une électrode de blindage arrière (22b) disposée sur une face radialement extérieure (9a) du support flexible (9), la deuxième électrode de détection arrière (22a) étant interposée entre l'électrode de blindage arrière (22b) et le corps tubulaire (8),
dans lequel ledit ensemble de capteurs capacitifs comprend en outre des moyens de circuit (9c, 52) configurés pour connecter la première et la deuxième électrode de détection arrière (21a, 22a) à une source de signal électrique (51), et pour connecter l'électrode de blindage arrière (22b) à la masse.

2. Dispositif selon la revendication 1, dans lequel le réseau arrière (20) de capteurs capacitifs comprend en outre un troisième capteur capacitif arrière (23) comprenant une troisième électrode de détection arrière (23a) disposée sur la face radialement extérieure (9a) du support flexible (9), et une deuxième électrode de blindage arrière (23b) disposée sur la face radialement intérieure (9b) du support flexible (9) et interposée entre la troisième électrode de détection arrière (23a) et le corps tubulaire (8),
dans lequel les moyens de circuit (9c, 52) sont en outre configurés pour connecter la troisième électrode de détection arrière (23a) à la source de signal électrique (51), et pour connecter la deuxième électrode de blindage arrière (23b) à la masse.

3. Dispositif selon la revendication 1 ou 2, comprenant en outre au moins l'un des éléments suivants :
un capteur capacitif avant non blindé (31) disposé sur un côté avant de l'élément de poignée (7) configuré pour recevoir les doigts de ladite main, le capteur capacitif avant non blindé (31) comprenant une électrode de détection avant non blindée (31a), disposée sur le support flexible (9), dans lequel les moyens de circuit (9c, 52) sont en outre configurés pour connecter l'électrode de détection avant non blindée (31a) à la source de signal électrique (51), et
un capteur capacitif avant blindé (32) disposé sur le côté avant de l'élément de poignée (7) configuré pour recevoir les doigts de ladite main, le capteur capacitif avant blindé (32) comprenant une électrode de détection avant blindée (32a), disposée sur la face radialement extérieure (9a) du support flexible (9), et une électrode de blindage avant (32b) disposée sur la face radialement intérieure (9b) du support flexible (9) et interposée entre l'électrode de détection avant blindée (32a) et le corps tubulaire (8), dans lequel les moyens de circuit (9c, 52) sont en outre configurés pour connecter l'électrode de détection avant blindée (32a) à la source de signal électrique (51), et pour connecter l'électrode de blindage avant (32b) à la masse.

4. Procédé pour faire fonctionner un dispositif de commande à poignée tournante selon l'une quelconque des revendications précédentes, comprenant
la mesure des variations de capacité ΔC1-a et ΔC3 du premier capteur capacitif arrière (21) et du deuxième capteur capacitif arrière (22), respectivement,
dans lequel une première condition dans laquelle la variation de capacité ΔC1-a est supérieure à un premier seuil et la variation de capacité ΔC3 est d'environ 0 est indicative d'une condition dans laquelle la main est proche de ou en contact avec l'élément de poignée (7) au niveau du côté arrière de l'élément de poignée (7) destiné à recevoir la paume de la main,
dans lequel une deuxième condition dans laquelle la variation de capacité ΔC1-a est supérieure au premier seuil et la variation de capacité ΔC3 est supérieure à un deuxième seuil est indicative d'une condition dans laquelle la main est proche de ou en contact avec le guidon,
dans lequel une troisième condition dans laquelle la variation de capacité ΔC1-a est supérieure au premier seuil et la variation de capacité ΔC3 est supérieure au deuxième seuil, avec ΔC1-a >> ΔC3, est indicative d'une condition dans laquelle la main est proche de ou en contact avec l'élément de poignée (7) au niveau du côté arrière de l'élément de poignée (7) destiné à recevoir la paume de la main, ainsi qu'en contact avec le guidon (H).

5. Procédé selon la revendication 4, pour faire fonctionner le dispositif de commande à poignée tournante selon les revendications 2 et 3,comprenant en outre
la mesure des variations de capacité ΔC2-a, ΔC1-b et ΔC2-b du troisième capteur capacitif arrière (23), du capteur capacitif avant non blindé (31) et du capteur capacitif avant blindé (32), respectivement,
dans lequel une quatrième condition dans laquelle la première condition est vraie et la variation de capacité ΔC1-b est supérieure à un troisième seuil est indicative d'une condition dans laquelle la main saisit complètement l'élément de poignée (7),
dans lequel une cinquième condition dans laquelle la variation de capacité ΔC2-a est supérieure à un quatrième seuil est en outre indicative de la condition dans laquelle la main est proche de ou en contact avec l'élément de poignée (7) au niveau du côté arrière de l'élément de poignée (7) destiné à recevoir la paume de la main,
dans lequel une sixième condition dans laquelle la variation de capacité ΔC2-a est supérieure au quatrième seuil et la variation de capacité ΔC2-b est supérieure à un cinquième seuil est en outre indicative de la condition dans laquelle la main saisit complètement l'élément de poignée (7),
dans lequel une septième condition dans laquelle seules les variations de capacité ΔC1-b et ΔC2-b sont supérieures aux seuils respectifs est indicative d'une condition dans laquelle la main est proche de ou en contact avec le côté avant de l'élément de poignée (7), et non avec le côté arrière de l'élément de poignée (7).
